# EUROPEAN PATENT SPECIFICATION

(11) **EP 3 511 138 B1**
(45) Date of publication and mention of the grant of the patent: **23.09.2020**
(21) Application number: 18151658.4
(22) Date of filing: 15.01.2018
(51) Int. Cl.: B29B 7/74, B29B 7/76, B29B 7/80

(54) **MIXING HEAD WITH MECHANICAL STIRRING DEVICE FOR REACTIVE RESINS, AND RELATED MIXING ASSEMBLY**
MISCHKOPF MIT MECHANISCHER RÜHRVORRICHTUNG FÜR REAKTIVE KUNSTHARZE, UND ZUGEHÖRIGE MISCHANORDNUNG
TÊTE DE MÉLANGE À DISPOSITIF D'AGITATION MÉCANIQUE POUR DES RÉSINES RÉACTIVES, ET ENSEMBLE DE MÉLANGE RELATIF

(43) Date of publication of application: 17.07.2019
(73) Proprietor: Afros S.p.A., 21042 Caronno Pertusella (VA) (IT)
(72) Inventor: VOLPATO, Marco, 21042 Caronno Pertusella (VA) (IT); CORTI, Maurizio, 22100 Como (IT)
(74) Representative: Botti, Mario

(56) References cited:
- EP-A2- 0 494 453
- EP-A2- 0 723 843
- JP-A- H11 293 027
- US-A- 4 399 105
- US-A- 5 562 883
- US-A- 6 105 822
- US-A1- 2011 148 000

## Description

### Field of application

The present invention relates to a mixing head with mechanical stirring for reactive resins, commonly called "low pressure head".

The invention also relates to a mixing assembly comprising the aforementioned head, which is provided with a device for introducing and recirculating the reactive resins and a mixer connected thereto.

These devices are preferably used in the production of polyurethane foams or moulded parts made of rigid or flexible polyurethane material.

### Prior art

The heads for mixing reactive resins perform mixing of the components introduced into the mixing chamber by means of a mechanical rotary mixer.

They are generally formed by a head body which is made of metal (normally aluminium or steel) and which houses: the shaft for rotating the mechanical mixer and the associated bearing set; the contact seals mounted on the shaft for retaining the liquids inside the mixing chamber; the ducts for introducing the reactive resins, the washing solvent and air for drying the same; the top cover of the mixing chamber with flange for connecting the removable basket (the basket defines the stator of the mixing chamber).

Example of mixing heads according to the prior art are disclosed, for instance, in documents US 4,399,105 and US 6,105,822.

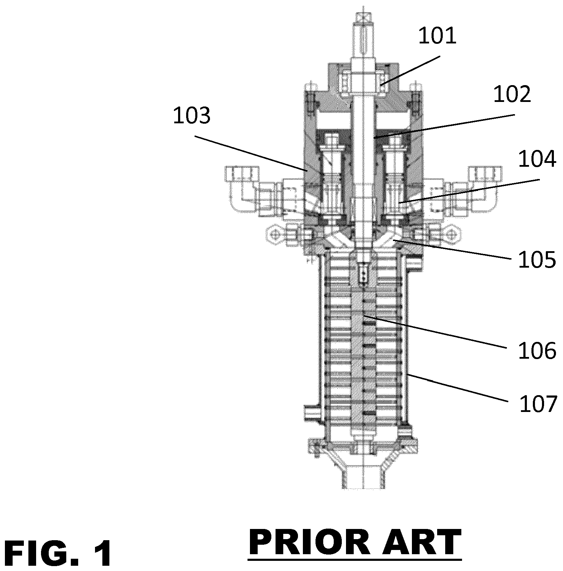

Fig. 1 shows an example of a conventional low pressure head according to the prior art, with associated mixer connected thereto.

The figure shows the following components: bearing set 101; shaft 102; mixing head body 103; recirculating valves 104; the pouring openings 105 for the chemical reagents; the mixer rotor 106 and its stator 107.

The valves 104, which may alternately cause recirculation of the chemical components or pouring of the chemical components into the mixing chamber, are mounted on the head body.

The valves are obviously provided with seals in both the pouring and recirculation configurations and with an actuating system which may be hydraulic or pneumatic.

Under normal conditions where there is no mixing, the valves are configured for recirculation and the chemical components supplied to the head are therefore recirculated back into their storage reservoir. When, instead, the valve elements are operated in the pouring configuration, they open the pouring into the mixing chamber and instead close the passage towards the recirculation ducts. The components thus flow into the mixing chamber where rapid rotation of the rotor generates the turbulence necessary for mixing.

Typically, as in the example shown in Fig. 1, axial-sliding valves are used, these providing a hydraulic seal against an engaging surface which closes off one of the passages formed in the sliding seat of the movable valve member.

These valves, although being substantially suitable for the purpose, nevertheless have a number of drawbacks which are described below.

Firstly, during the switching movement, axial-sliding valves produce a variation in the volume supplied to the both the pouring and recirculation ducts. They therefore cause pumping of the chemical components in the direction of movement such that, during pouring or closing transients, the amount pumped by the movement depends on the degree of axial movement and the diameter and geometry of the valve such that it modifies the mixing ratio of the components during the movement operations. Consequently, it can no longer be ensured that the stoichiometric reaction ratio is maintained during the initial and final transient stages.

Secondly, the pressure of the incoming chemical components exerts a thrust on the valves. The thrust may oppose or favour the movement of the sliding member, consequently varying its actuation time (quite significantly if there is a pneumatic control system) or causing the movement of the sliding member if there is no power. Normally the speed of movement of the valves determines the exact final amount of the reactive resins which are supplied by the head. Therefore, if the independently controlled valve movements occur in an unsynchronized manner and their displacement also generates a variation in volume inside the ducts, parts may be moulded with an overall supplied amount different from the set amount and with incorrect reagent ratios at the start and end of the process.

Therefore, depending on whether they are perfectly synchronized over time and at the start of actuation or are unsynchronized over time, the independently controlled valves introduce into the mixing chamber quantities of chemical components and flows during the transients which are different or incorrect with respect to the stoichiometric ratio. In particular, major errors may arise when the reacted polyurethane causes sticking of one or both the valves in the closing position, generating an actuation time lag which may be as much as several tenths of a second.

In order to overcome the aforementioned drawbacks, preventing errors in the ratio during the pouring and recirculation transients, mixing heads have been proposed where the switching is performed by rotary valves which are mechanically synchronized by means of a rigid mechanical connection.

The valves rotate alternately between a recirculation position and a pouring position, distributing the flow accordingly. Depending on the position assumed, a duct provided in the valve body communicates alternately with the recirculation duct or the pouring duct, closing off the other one.

With this mechanical configuration of the distribution and switching valve device, the internal volume of the valve does not vary, nor does that of the communicating ducts, thereby preventing both the pumping effect and the variation in volume effect. Therefore, rotary valves do not produce variations and errors in the stoichiometric ratio during the transient associated with their movement.

These valves, moreover, are mechanically connected together, such that they necessarily perform the same movement over the same time interval. It is thus avoided that possible sticking of one of the valves may cause unacceptable time lags during switching, as occurs in the case of independently controlled valves.

The rotary valve mixing heads, however, currently have a substantial drawback since they allow the pouring and recirculation of only two reagent chemical components. It therefore seems that these heads may be improved from the point of view of the application range and operational flexibility. For example, they may not be used to mix three components, nor do they allow rapid production change-over in the case of different polyurethane foams or compounds.

The technical problem underlying the present invention is therefore that of devising a mixing head which overcomes the abovementioned drawbacks of the prior art and which in particular solves the problems associated with the stoichiometric ratio and synchronism during the pouring and recirculating transients, which are typical of axial-sliding valves, ensuring at the same time a greater degree of flexibility and variety of applications compared to the current heads with rotary valves.

Another object of the present invention is to provide a head which allows different types of chemical reagents to be selected and introduced alternately into the mixing chamber, with variation in real time - i.e. without the need for machine stoppage - of at least one of the two chemical reagents introduced into the chamber.

Yet another object of the present invention is to provide a head which allows the simultaneous introduction of more than two components inside the mixing chamber.

Yet another object is to propose a mixing head which has smaller dimensions, is easy to use and has a low production cost.

### Summary of the invention

The proposed solution forming the basis of the present invention is that of using rotary valves which are not rigidly connected to a common shaft as in the prior art, but which are rotationally coupled together by means of controlled couplings, so that it is possible to change, by selecting them, the components which are introduced into the mixing chamber while maintaining the mechanical synchronism of the valves and ensuring reliable hydraulic separation of the reactive chemical components during the pouring and recirculation steps.

Based on this proposed solution, the technical problem is solved by a mixing head according to claim 1 with mechanical stirring for reactive resins.

The device therefore is designed and constructed to select and introduce into the mixing chamber alternately two different types of one of the chemical reagents (defined in the present application as: first secondary reagent or second secondary reagent). The aim is to mix it with the other reagent resin (defined in the present application as: main reagent) so as to obtain polyurethane foams or compounds which have different and specific characteristics.

With this second mode of operation one of the two secondary rotary selectors is uncoupled by the common control system, keeping it in the recirculation configuration, while the other secondary rotary selector is coupled with the main rotary selector. In this configuration, the main reagent (preferably, but not exclusively, isocyanate) and one of the two secondary reagents (preferably, but not exclusively, two polyols of a different type) are mixed together.

Alternatively, it is possible to keep the three valves, namely the three rotary selectors, rigidly connected together by means of the respective couplings and perform simultaneously the switching of the three pouring valves, obtaining a combination which allows the mixing of three components in the mixing chamber.

The rigid synchronization and rotation avoid the aforementioned drawbacks associated with the use of axial-sliding valves.

Preferably, the three valves, namely the main rotary selector, the first secondary rotary selector and the second secondary rotary selector, are coaxial.

Preferably, said main rotary selector is integral with a support shaft; said first secondary rotary selector and said second secondary rotary selector are respectively integral with a first sleeve and a second sleeve which are arranged over said support shaft on the two opposite sides of the main rotary selector, said first and second coupling selectively rotationally coupling said first sleeve and second sleeve with the support shaft.

Preferably the pouring and recirculation openings both of the rotating part and of the fixed or bushed part of said rotary valves have a geometry such that said openings are opening and closed in the same rotational position of the different rotating cores.

The aforementioned couplings, which are incorporated in the support shaft, allow the rotary selectors to be coaxially mounted in sequence, with an obvious advantage in terms of a reduction in the overall dimensions. Moreover, as a result of this special feature, a single axial hole may be formed in the inner cylindrical surface on which all three rotary selectors open out. It is thus required to machine one single hole with a high degree of precision so as to ensure the tolerances as regards the cylindrical form necessary for fluid-tightness of the selectors.

Preferably and in a particularly advantageous manner, a separation zone, conveniently filled with an inert barrier liquid, is provided between a central portion of said support shaft which carries the main rotary selector and said sleeves.

Preferably the pouring and recirculation openings are geometrically identical so as to ensure the synchronism of the resins flows during the transients for opening and closing of the openings.

In this way it is possible to avoid any possible contamination, even of a minimal nature, of the reagent liquids. This contamination, over time, could in fact result in the formation of encrustations capable of stopping entirely rotation of the rotary selectors, therefore making the said mixing head unusable.

The first coupling and second coupling mentioned above may be mechanical type couplings, in particular toothed couplings. Preferably, they consist of front teeth couplings

In particular, both said first coupling and said second coupling may comprise respective driving front teeth situated at the end of the respective first or second sleeve facing the main rotary selector, and respective driven front teeth rotationally integral with the support shaft and axially slidable with respect to thereto. The displacement of the driven front teeth allows, in a manner known per se in the sector of mechanical couplings, coupling of the two sets of teeth, rigidly connecting the sleeve together with the support shaft over which it rotates; on the other hand, the movement away of the driven teeth causes uncoupling so that the sleeve rotates again idle with respect to the underlying support shaft.

The mixing head according to the present invention may advantageously comprise a first selection actuator for rotationally driving the first secondary rotary selector and a second selection actuator for rotationally driving the second secondary rotary selector. Actuation of the two selectors is therefore independent.

The rotation is therefore optionally transmitted to the main rotary selector respectively by means of the first coupling or by means of the second coupling, when in the coupled configuration. The main rotary selector is therefore a member which is driven with respect to the secondary actuators and may be moved only at the same time as - and in synchronism with - one of the latter.

Preferably, said selection actuators are linear actuators, preferably of the pneumatic type, and their movement is transmitted to the respective secondary rotary selector by means of a rack-and-pinion transmission.

In particular, the respective rack-and-pinion transmission comprises preferably a respective double-toothing pinion which has, in addition to radial teeth for performing transmission, driving front teeth which cooperate with driven front teeth so as to define the respective coupling. A single member with optimum hardness and finish characteristics (i.e. the double-toothing pinion) is thus produced and is then keyed on top of the respective sleeve.

The mixing head according to the present invention also comprises preferably a first coupling actuator and a second coupling actuator, both preferably of the pneumatic type, said actuators performing respectively coupling/uncoupling of the first coupling and coupling/uncoupling of the second coupling.

Said actuators are configured as components integrated in the mechanical coupling components so as to reduce the overall dimensions of the head and allow easy access thereof to the cavities or moulds into which the reactive resin is poured.

Said coupling actuators may comprise in particular a double-plate piston designed to move axially a component of the respective coupling, namely the driven teeth which will be formed on the inner surface of the plate facing the rotary selectors.

The said integration of the control system with the coupling itself gives rise to obvious advantages in terms of mechanical simplicity and smaller dimensions.

Each of the aforementioned paths for the main and secondary reagents comprises: an entry duct extending between the respective entry port and the respective rotary selector; a pouring duct extending between the respective rotary selector and the outlet of the mixing chamber; a recirculation duct extending between the respective rotary selector and the respective recirculation port. Each of said rotary selectors has a fixed internal path between two access openings and the openings of said paths are geometrically and mechanically synchronized; in the pouring configuration, the rotary selector has one access opening communicating with the respective entry duct and the other access opening communicating with the respective pouring duct, closing off upstream the recirculation duct; in the recirculating configuration, the rotary selector has one access opening communicating with the respective entry duct and the other access opening communicating with the respective recirculation duct, closing off upstream the pouring duct.

Downstream of the entry openings in the mixing chamber and downstream of the recirculation openings adjustable pin devices are provided so as to form adjustable hydraulic throttles for the hydraulic ducts located downstream of said openings; these throttles allow adjustment and balancing of the pressures inside the ducts for metering the reactive resins both in the condition for pouring into the mixing chamber and for recirculation condition, in order to compensate for and reduce to a minimum the variations in flowrate due to elastic reactions in the processed liquids and/or inside the ducts in the event of sudden increases in pressure.

The aforementioned technical problem is also solved by a mixing assembly comprising a mixing head of the aforementioned type connected to a mixer known per se. The mixer defines a mixing chamber inside which one or more outlets of the mixing head emerge (it should be noted in this connection that the different pouring ducts of the main path and the secondary paths may both converge in a single outlet and emerge separately inside the mixing chamber) and a rotor rotatable inside said mixing chamber.

The stator, or the fixed part, of the mixing chamber may have a smooth internal surface or be provided with fixed fins which improve the turbulence induced by rotating blades in any case mounted on the rotor. The stator may be provided with an external cooling jacket and an outlet nozzle which regulates the outflow.

The nozzle may be regulated so as to form a passage with a reduced aperture for maintaining a given pressure inside the chamber, thus avoiding so-called cavitation effects.

Further characteristic features and advantages will emerge more clearly from the detailed description provided hereinbelow of a preferred, but not exclusive embodiment of the present invention, with reference to the attached figures.

### Brief description of the drawings

- Figure 1 shows a front view of a mixing assembly comprising a head according to the prior art;

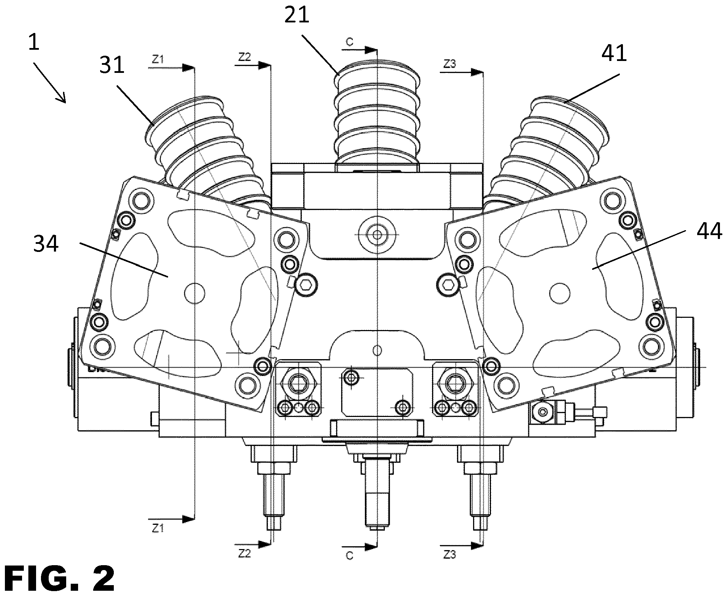

- Figure 2 is a front view of a mixing head according to the present invention;

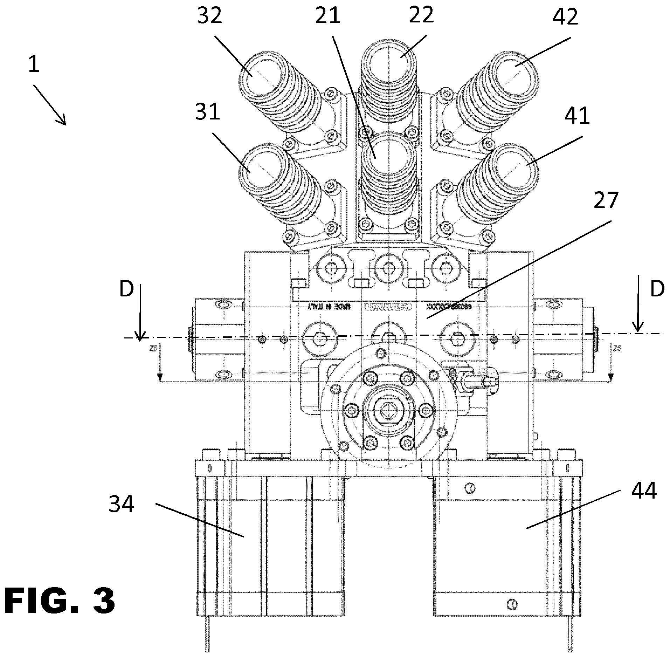

- Figure 3 shows a view, from above, of the mixing head shown in Figure 2;

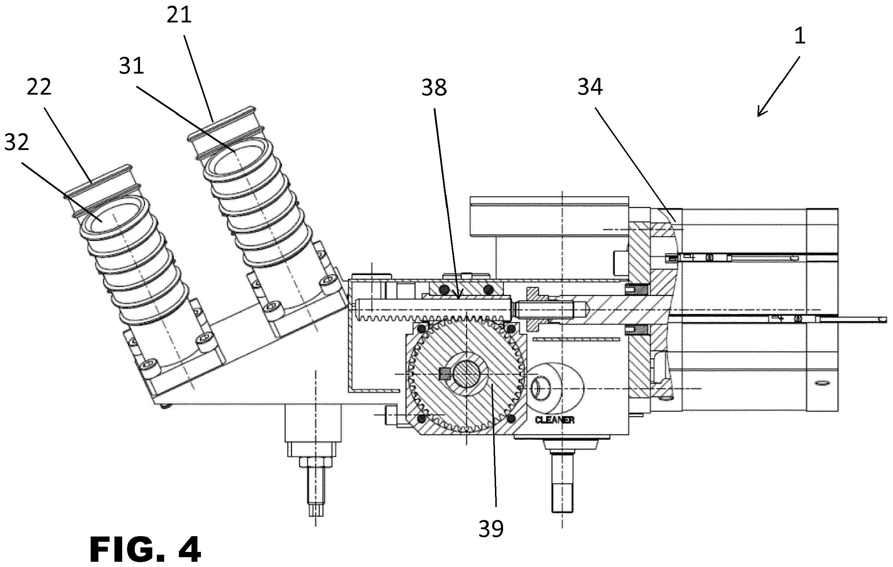

- Figure 4 shows a side view of the mixing head according to Figure 2, cross-sectioned along the plane Z1-Z1;

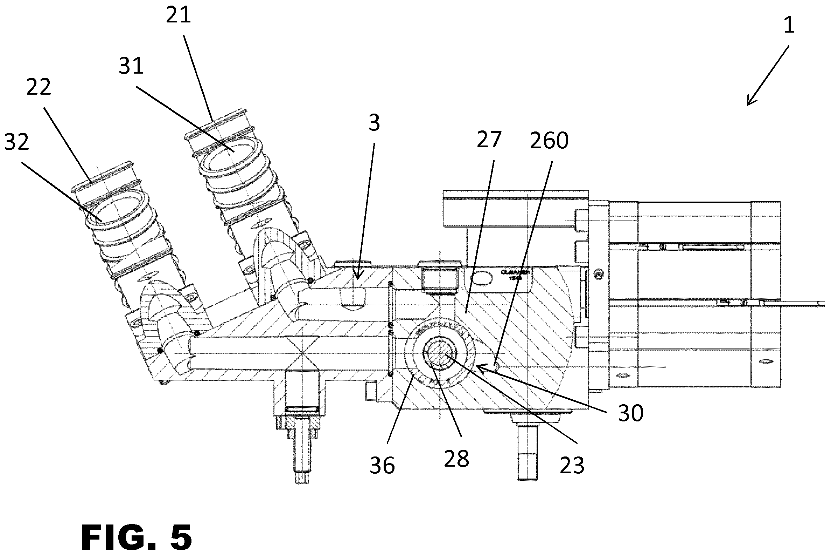

- Figure 5 shows a side view of the mixing head according to Figure 2, cross-sectioned along the plane Z2-Z2;

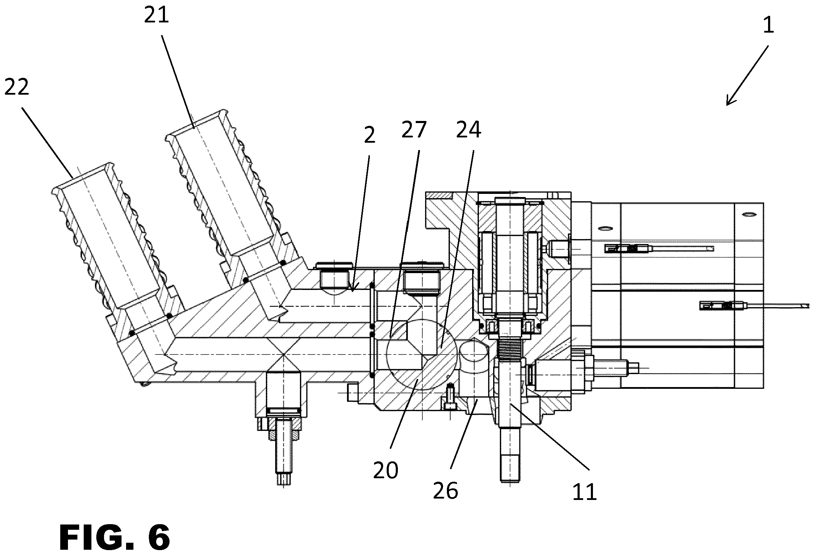

- Figure 6 shows a side view of the mixing head according to Figure 2, cross-sectioned along the plane C-C;

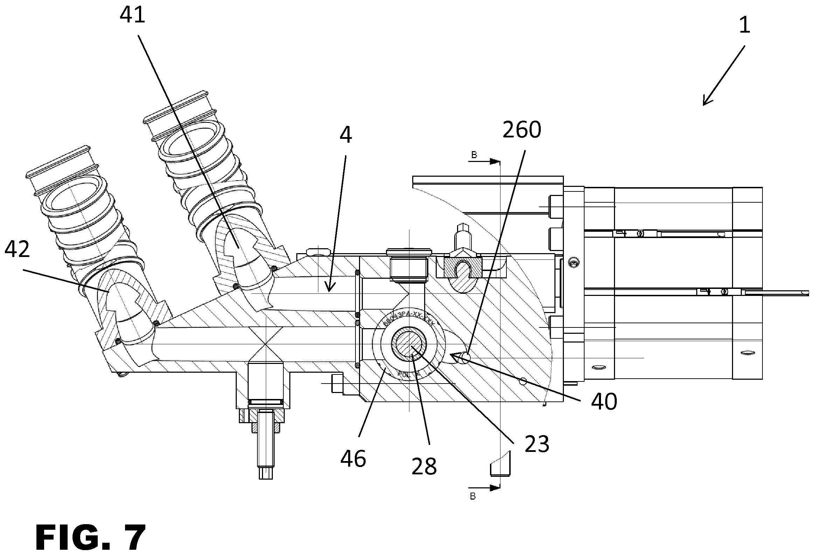

- Figure 7 shows a side view of the mixing head according to Figure 2, cross-sectioned along the plane Z3-Z3;

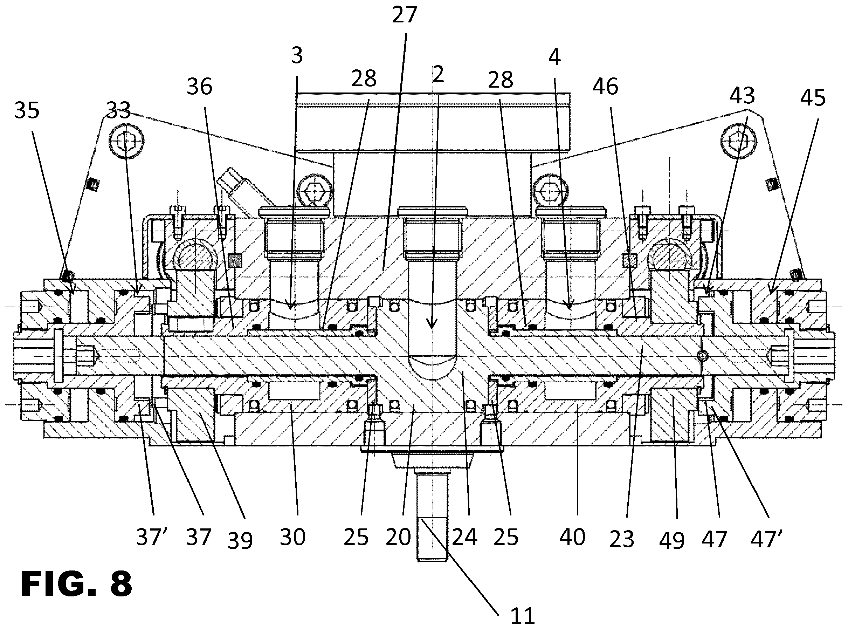

- Figure 8 shows a front view of a detail of the mixing head according to Figure 3, cross-sectioned along the plane D-D;
- Figure 9 shows a front view of a mixing assembly comprising the mixing head according to Figure 2 connected to a mixer known per se;
- Figure 10 shows a side view of the mixing assembly according to Figure 9.
- Figure 11 shows a perspective view of a detail of a mechanical coupling which couples together two of the rotary valves of the device.

### Detailed description

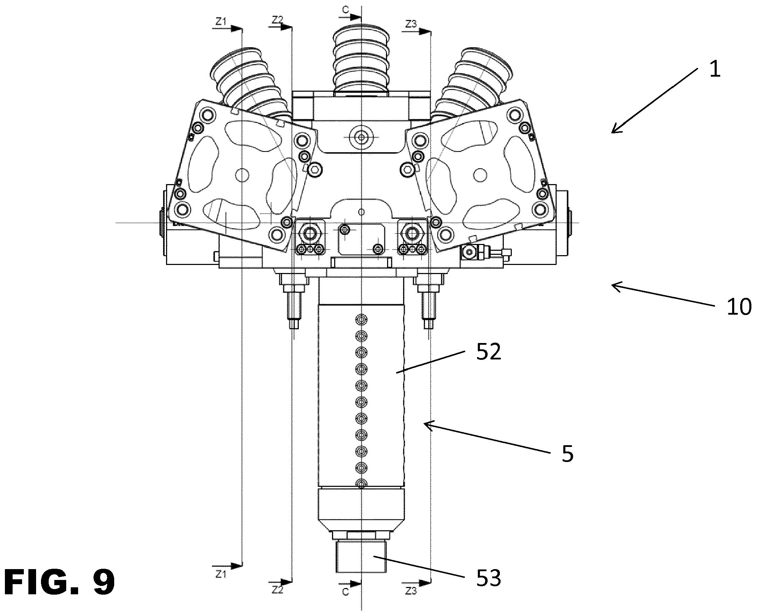

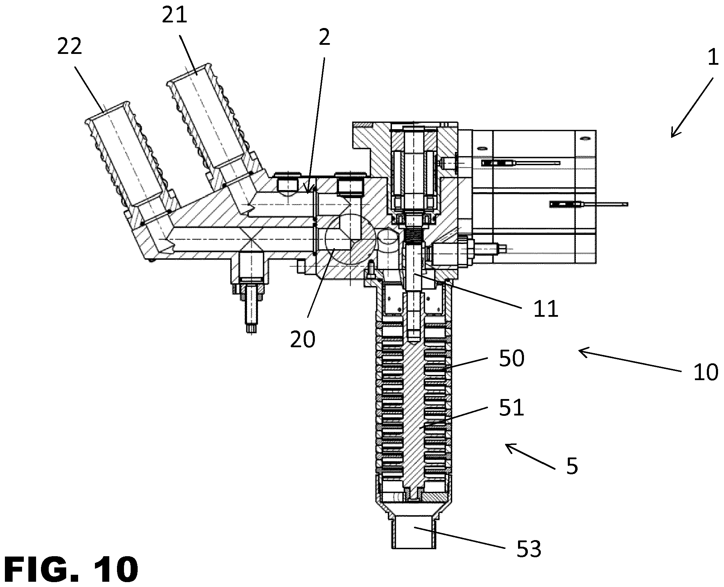

With reference to these figures, 1 denotes overall and in schematic form a mixing head according to the present invention. As can be seen from Figures 9 and 10, a mechanical mixer 5 known per se can be connected together with this mixing head 1 so as to obtain a functionally complete mixing assembly 10.

The mixing head 1 and the associated assembly 10 are shown in Figures 1 and 9 in a normal operative configuration; in the continuation of the present description, the relative and absolute positions and the orientations of the various elements which form the device - defined by means of terms such as "upper" and "lower", "above" and "below", "horizontal" and "vertical" or other equivalent terms, must always be interpreted with reference to this configuration.

The mixing head 1 is composed of a head body, preferably made of aluminium or steel, which houses the various elements described below.

First of all, in a manner known per se, a vertical drive shaft 11 is provided and rotationally drives a rotor 51 of the mechanical mixer 5, with an associated bearing set. Contact seals are conveniently mounted on the drive shaft 11 in order to contain the liquids inside the mixing chamber situated underneath it.

The mechanical mixer 5, comprising the aforementioned rotor 51 and a basket stator 52 is connected at the bottom to the mixing head 1. The basket stator 52 defines internally the mixing chamber 50 inside which the rotor 51 extends.

The rotor 51 may be provided with profiling consisting of vanes or grooves of varying shapes required to create the mixing turbulence during rotation.

On the other hand, the basket stator 52 may be provided with fixed vanes for improving the mixing turbulence as well as a jacket for thermal conditioning.

The basket stator 52 also has a flange for sealed connection together with the head body, and an outlet nozzle 53 which regulates the outflow and may be set to form a passage with a small aperture so as to maintain a moderate pressure inside the chamber, preventing cavitation effects.

Fluid paths are also provided inside the head body for the different reagents to be introduced into a mixing chamber 50 defined by the mechanical mixer 5.

In the preferred embodiment described here, said paths are three in number: a main path 2 for a main reactive resin, preferably an isocyanate; a first secondary path 3 for a first secondary reactive resin, preferably a first polyol; and a second secondary path 4 for a second secondary reactive resin, preferably a second polyol of a type different from the first one.

The three aforementioned paths 2; 3; 4 have a substantially similar geometrical configuration, comprising an entry duct, a pouring duct and recirculating duct. The entry duct departs from a respective entry port 21; 31; 41 extending as far as a branch-off point; the pouring duct leads from this branch-off point to an outlet 26, 260 of the mixing chamber 50; finally the recirculation duct leads from the branch-off point to a respective recirculation port 22; 32; 42 which during use is conveniently connected to a reservoir storing the respective reactive resin.

It should be noted that, in the embodiment described here, the entry and recirculation ducts extend in different and parallel planes; as regards the pouring ducts, the two secondary pouring ducts, which are designed to introduce two polyols which are not reactive with each other, converge towards a single upper outlet 260, while the main pouring duct, designed to convey the isocyanate, which is reactive with both the aforementioned polyols, is introduced via a separate bottom outlet 26 which emerges inside the mixing chamber 50 lower down along the rotating shaft of the dynamic mixer.

At the aforementioned branch-off point, the three paths are intercepted by a respective rotary switching valve or by a rotary selector housed in its cylindrical seat. The main path 2 is intercepted by a main rotary selector 20 which is intended for the resin reactive with both the other two resins; the first secondary path 3 by first secondary rotary selector 30; the second secondary path 4 by a second secondary rotary selector 40.

The aforementioned valves, namely the rotary selectors 20; 30; 40 and the associated cylindrical seats are suitably housed inside a metal hydraulic block 27 mounted on the remaining head body by means of special screws and with sealing gaskets on the holes.

The washing head 1 is also provided with ducts for the washing solvent and for the air for drying the same which are introduced by means of separate control systems - preferably consisting, in a manner known per se, of simple check valves - which open as a result of the pressure of the components when they are supplied for the washing function.

The aforementioned hydraulic block contains, as mentioned above, the three rotary selectors 20; 30; 40 which, by means of an alternate rotary switching movement - perform recirculation of the chemical components or introduce them into the mixing chamber 50 through ducts which remain separate for the resins which are reactive with each other. The selection and operation of the single selectors, as discussed below, is performed by means of a mechanism which uses two integrated mechanical couplings.

In particular, as will emerge from the description below, the main selector 20 switches and introduces into the mixing chamber 50 always the same reagent resin (usually isocyanate), while the two secondary selectors 30, 40, situated alongside the main selector, each switch and introduce a different resin (usually two different polyols).

These secondary selectors 30; 40 are moved with independent rotational movements provided by a rack-and-pinion transmission 38 (only one of which, that of the first secondary selector 30, is shown in the attached figures) operated respectively by a first and second linear selection actuator 34, 44. Said selection actuators 34, 44 are preferably in the form of pneumatic or hydraulic pistons.

It is pointed out that the main rotary selector 20 is situated in an intermediate position with respect to the secondary rotary selectors 30; 40. In fact, the entire mixing head 1, including the hydraulic block 27, has a substantially symmetrical configuration with respect to a centre plane passing through the main rotary selector 20 and perpendicular to the axis of revolution of the latter. For this reason, in the present description - unless expressly indicated otherwise - the elements or characteristics which are referred to as being "first" and "second" (such as the first secondary rotary selector 30 and the second secondary rotary selector) are generally to be understood as being a mirror image and substantially identical to each other.

Each of the three rotary selectors 20; 30; 40 has a cylindrical form inside which an internal flow passage connecting two separate access openings extends. The axis openings are located on a same section of the outer circumference, but are conveniently spaced from each other at an angle at the centre preferably of between 60° and 120°, even more preferably equal to 90°.

The angular distance between the access openings is obviously dependent on the arrangement of the outlets of the aforementioned entry, pouring and recirculation ducts so that the two access points, depending on the angular positioning of the selector, may be respectively arranged opposite the entry duct and the pouring duct or, alternatively, opposite the recirculation duct and the entry duct. The access openings of the selectors and the outlets of the ducts formed in the hydraulic block or head body 27 are in particular spaced so as to switch when there is zero or negative coverage.

The main rotary selector 20 is used, as already mentioned, for distributing a resin which is always present (for example isocyanate). It is preferably formed as one piece in a central portion 24, with a larger diameter, of a support shaft 23 rotatably arranged inside a transverse through-hole of the hydraulic block or head body 27.

On the two sides of the central portion 24 which defines the main rotary selector 20, the support shaft 23 extends in the form of two symmetrical and opposite half-shafts formed as one piece and machined with hardened and ground surfaces.

Two radial holes which communicate with each other and define the aforementioned internal flow passage, as well as the grooves for the circumferential and transverse seals, of the main rotary selector 20 are formed on said central portion 24.

The two secondary rotary selectors 30; 40 situated on the sides of the main selector 20 are instead formed on a corresponding number of sleeves 36; 46, called first and second sleeve, respectively, depending on the corresponding secondary selector. The sleeves 36; 46 are rotatably positioned over the aforementioned half-shafts of the support shaft 23, with the at least partial arrangement in between of a bush 28 acting as a bearing.

Along the respective secondary path 3; 4, said sleeves 36; 46 are passed through by two intersecting radial holes, while the central cylindrical hole of the sleeve, which is perpendicular to the orientation axis of the radial holes, has three different diameters.

The larger diameter portion of the aforementioned central cylindrical hole, which is formed in the region of the respective secondary rotary selector 30; 40, has the function of establishing communication between the two radial holes which define the internal flow path.

The intermediate diameter portion, which faces the central portion 24 of the support shaft 23, houses the aforementioned bush 28 which, in addition to internally sealing the internal flow path mentioned above, acts as a bearing for the relative rotation of the sleeve 36; 46 about the support shaft 23. The bush 28 is also provided with seals which prevent the resin from passing along the support shaft 23.

The smaller diameter portion finally acts as a passage for the projection of the lateral half-shafts of the support shaft 23.

The three valves, namely the three rotary selectors 20; 30; 40, are separated by two separation zones 25 which prevent possible seepage of the mutually reactive liquids should there be any leakage of the contact seals mounted on the rotating part of each valve.

The separation zone 25 is filled with an inert barrier liquid which prevents any possible contamination and pouring of the mutually reactive liquids even in very small amounts which, over time, would cause the formation of encrustations which may result in complete blockage of the device and the said mixing head 1.

The coupling elements for a respective double-toothing pinion 39; 49 which is fastened by means of a key and which transmits the rotational movement to the respective secondary rotary selector 30; 40 are provided on both the first and second sleeves 36; 46 at the ends which are remote from the central portion 24 of the support shaft 23.

A radial toothing of said double-toothing pinions 39; 49 forms in fact the pinion element of the rack-and-pinion transmission mentioned above. Actuating pistons - preferably of the pneumatic type - which form the aforementioned first and second selection actuators 34, 44 are mounted on each of the sides of the block. These actuators, moving the rack forwards or backwards, cause the alternate rotation of the respective secondary rotary selector.

A first and a second coupling 33, 43 are provided at the opposite ends of the valve body, namely at the two ends of the support shaft 23, and allow the rotation of the support shaft 23 to be rigidly connected together with the first sleeve 36 and the second sleeve 46, respectively.

The two couplings 33; 43, which are substantially identical, are front teeth couplings which are operated by a respective pneumatic coupling actuator 35; 45. Driven front teeth 37'; 47' are integrally formed with the actuator, while driving front teeth 37; 47 are formed on the front of the aforementioned double-toothing pinion 39; 40.

Said double-toothing pinion 39; 49 therefore performs the function of a rotating pinion of the respective rack-and-pinion transmission and that of a front teeth counter-coupling.

The teeth of the coupling 33; 43 have a shape in the form of rectangular crown segments with chamfered front edges, specifically designed to ensure coupling in a precise and repeatable position.

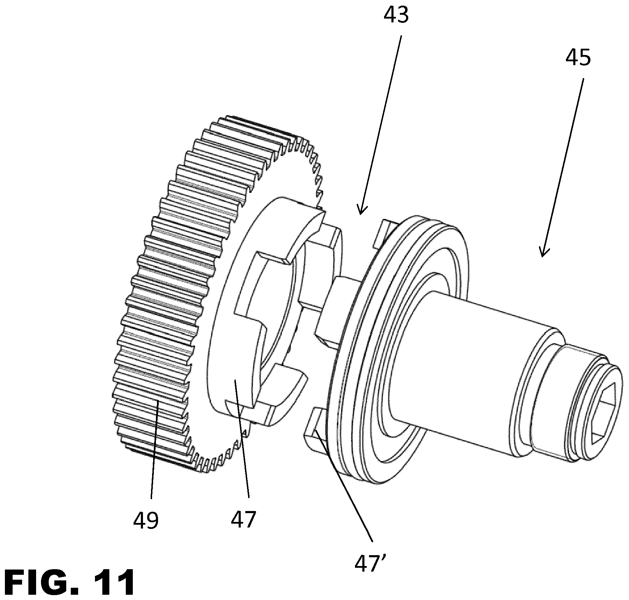

The second coupling 43 between the double-toothing pinion 49 and the respective coupling actuator 45, which is an identical mirror-image of the first coupling 33, is shown separately in Figure 11.

The coupling actuator 35; 45 comprises in particular a double-plate piston which extracts or couples the driven front teeth 37'; 47' so as to drive or uncouple from the stationary rotating part - i.e. selector - of each valve.

The double-plate piston therefore has an external plate or section in the form of a disk with the associated seals and an internal plate or section again in the form of a disk, but with other toothing which couples with or uncouples from the counter-coupling, namely the aforementioned pinion 39; 49.

In other words, the innermost plate has the teeth of the front coupling (the driven front teeth 37', allowing the actuating means and the coupling to be combined in a single member which has small dimensions similar to those of the valve elements and may therefore be incorporated in the block of these valves without occupying an excessive amount of space. Moreover, maintenance is made easy and operation may be checked by means of special sensors on the single coupling.

The aforementioned double-plate piston, which is pneumatically controlled, slides axially on the support shaft 23, while it is rotationally locked by means of a tongue fixed thereto, sliding inside a groove of the coupling member.

The function of the switching valves comprising the rotary selectors 20; 30; 40 is now briefly described below.

The chemical components are supplied to the switching valves mounted on the mixing head by means of metering pumps, situated outside the head and not shown in the attached figures.

If there is no specific switching signal, the three rotary selectors 20; 30; 40 are in the recirculation configuration and the chemical components are therefore deviated towards their storage reservoir, namely towards the respective recirculation port 22; 32; 42.

It should be noted that the openings on the bores of the rotary valve elements and the counter-openings formed in the hydraulic block or head body 27 and in the respective sleeves 36; 46 are geometrically formed with the opening and closing sections corresponding or being the same so as to synchronize perfectly and mechanically the opening and recirculating functions during the respective transients.

When the valve elements are switched into the pouring condition, the rotary selectors 20; 30; 40 rotate and open so as to allow the simultaneous pouring of the chemical components into the mixing chamber. At the same time the passage towards the recirculation ducts is closed.

The components thus flow, via the outlet 26, into the mixing chamber 50 where the rotor 51, which is imparted a high-speed rotating movement, produces the turbulence necessary for mixing, and then flow out from the bottom nozzle towards a mould, situated outside the device and not shown in the attached figures.

The first rotary selector 20 rotates alternately and switches so as to recirculate or introduce the reactive resin which is non-selectable and which shall be called hardening resin and must always be present, in particular isocyanate, into the mixing chamber 50.

The rotation of the first rotary selector 20 is controlled by the front teeth couplings 33; 43 slidable on the ends of the half-shafts of the support shaft 23.

When one of the couplings 33; 43 is coupled, it may transmit the movement imparted to the respective sleeve 36; 46 by means of the rack-and-pinion transmission to the entire support shaft 23, ultimately promoting the rotation of the main selector 20 in synchronism with the coupled secondary selector 30; 40.

When the coupling 33; 43 is uncoupled, it may instead keep the respective secondary rotary selector in the recirculation position. The drive block formed by the rack-and-pinion pair moreover prevents rotation of the support shaft 23 from moving the uncoupled selector in an uncontrolled manner as a result of simple friction or sticking of the chemical agent.

Each sleeve 36; 46 is in fact free to rotate relative to the respective half-shaft of the support shaft 23; the relative rotation is ensured by the aforementioned bush 28 acting as a bearing.

In order to synchronize the rotation of a secondary selector 30; 40 with the main selector 20, the respective coupling 33; 43 is coupled (by actuating the coupling actuator 35; 45) and the respective selection actuator 34; 44 is operated.

Throttling pins are provided upstream and downstream of the selectors 20, 30, 40 along the respective hydraulic ducts for pouring into the mixing chamber 50 and recirculation of the reactive resins, said pins being able to be set so as to produce constrictions, namely pressure increases which can be set so as to balance the incoming pressures both during pouring into the mixing chamber and during recirculation in order to prevent pre-flows of an elastic nature from occurring when there are pressure increases during switching.

## Claims

1. Mixing head (1) with mechanical stirring for reactive resins, comprising: a head body also acting as a hydraulic block internally defining a main path (2) for a main reactive resin, a first secondary path (3) for a first secondary reactive resin, and a second secondary path (4) for a second secondary reactive resin; **characterized in that** each of said paths (2; 3; 4) is able to be selectively configured, by means of rotation respectively of a main rotary selector (20), a first secondary rotary selector (30) and a second secondary rotary selector (40), in a pouring configuration, where each of said paths (2; 3; 4) extends between a respective upstream entry port (21; 31; 41) and an outlet (26, 260), arranged so as to lead into a downstream mixing chamber (50), or in a recirculation configuration, where each of said paths (2; 3; 4) extends between the respective upstream entry port (21; 31; 41) and a respective downstream recirculation port (22; 32; 42); and **in that** said mixing head (1) further comprises: a first coupling (33) for selectively coupling together the first secondary rotary selector (30) and the main rotary selector (20); and a second coupling (43) for selectively coupling the second secondary rotary selector (40) and the main rotary selector (20).

2. Mixing head (1) according to claim 1, wherein said first coupling (33) and said second coupling (43) couple the respective rotary selectors (20, 30; 20, 40) in mechanically corresponding positions in which the two coupled rotary selectors define the same configuration for the main path (2) and the first secondary path (3) and for the main path (2) and the second secondary path (4), respectively intercepted.

3. Mixing head (1) according to claim 1, wherein the rotary selectors (20, 30, 40) have access openings at the same angles, such that the synchronous rotation of two rotary selectors (20, 30, 40) maintains a same configuration of the intercepted main path (2), first secondary path (3) and second secondary path(4).

4. Mixing head (1) according to one of the preceding claims, wherein said main rotary selector (20), said first secondary rotary selector (30) and said second secondary rotary selector (40) are coaxial.

5. Mixing head (1) according to claim 4, wherein said main rotary selector is integral with a support shaft (23); said first secondary rotary selector (30) and said second secondary rotary selector (40) being respectively integral with a first sleeve (36) and a second sleeve (46) which are arranged coaxially above said support shaft (23) at the two opposite sides of the main rotary selector (20), said first and second coupling (33; 43) selectively rotationally coupling said first sleeve and second sleeve (36; 46) with the support shaft (23).

6. Mixing head (1) according to claim 5, wherein a separation zone (25), filled with an inert barrier liquid, is provided between a central portion (24) of said support shaft (23), which supports the main rotary selector (20), and said sleeves (36; 46).

7. Mixing head (1) according to one of the preceding claims, wherein said first coupling (33) and second coupling (43) are toothed couplings.

8. Mixing head (1) according to claim 7, wherein said first coupling (33) and second coupling (43) are front teeth couplings.

9. Mixing head (1) according to claim 8 when dependent on claim 5, wherein both said first coupling (33) and said second coupling (43) comprise respective driving front teeth (37; 47) situated at the end of the respective first or second sleeve (36; 46) facing the main rotary selector (20), and respective driven front teeth (37'; 47') rotationally locked with the support shaft (23) and axially slidable with respect thereto.

10. Mixing head (1) according to one of the preceding claims, further comprising a first selection actuator (34), for rotationally driving the first secondary rotary selector (30), and a second selection actuator (44), for rotationally driving the second secondary rotary selector (40); rotation being transmitted, where required, to the main rotary selector (20), respectively by means of the first coupling (33) or by means of the second coupling (43), when in the coupled configuration.

11. Mixing head (1) according to claim 10, wherein said first selection actuator (34) and said second selection actuator (44) are linear actuators, the movement being transmitted to the respective secondary rotary selector (30; 40) by means of a rack-and-pinion transmission (38).

12. Mixing head (1) according to either one of claims 10 or 11, wherein said selection actuators (34, 44) are pneumatic actuators.

13. Mixing head (1) according to one of the preceding claims, wherein both the first and second secondary rotary selectors (30; 40) are provided with a respective double-toothing pinion (39; 49) which has, in addition to radial teeth for transmitting the movement, driving front teeth (37; 47) which cooperate with driven front teeth (37'; 47') so as to define the respective coupling (33; 43).

14. Mixing head (1) according to claim 13, wherein each secondary rotary selector (30; 40) is comprised within the diametral bulk of the respective double-toothing pinion (39; 49).

15. Mixing head (1) according to one of the preceding claims, further comprising a first coupling actuator (35) and a second coupling actuator (45), said coupling actuators performing respectively coupling/uncoupling of the first coupling (33) and coupling/uncoupling of the second coupling (43).

16. Mixing head (1) according to claim 15, wherein said coupling actuators (35; 45) comprise a double-plate piston for axially moving a component of the respective coupling (33; 43).

17. Mixing head (1) according to one of the preceding claims, wherein: each of said paths (2; 3; 4) comprises an entry duct extending between the respective entry port (21; 31; 41) and the respective rotary selector (20; 30; 40); a pouring duct extending between the respective rotary selector (20; 30; 40) and an outlet (26; 260) on the mixing chamber (50); a recirculation duct extending between the respective rotary selector (20; 30; 40) and the respective recirculation port (22; 32; 42); each of said rotary selectors (20; 30; 40) has a fixed internal path between two access openings; in the pouring configuration the rotary selector (20; 30; 40) has one access opening communicating with the respective entry duct and the other access opening communicating with the respective pouring duct, closing off upstream the recirculation duct; in the recirculation configuration the rotary selector (20; 30; 40) has one access opening communicating with the respective entry duct and the other access opening communicating with the respective recirculation duct, closing off upstream the pouring duct, wherein, when coupled by means of the first coupling (33) and the second coupling (43), the respective rotary selectors (20, 30; 20, 40) move with synchronism of the access openings on the opening and closing edges.

18. Mixing assembly (10) comprising a mixing head (1) according to one of the preceding claims connected to a mixer (5), said mixer (5) comprising: a basket stator (52) internally defining the mixing chamber (50) inside which one or more outlets (26) of the mixing head (5) emerge; and a rotor (51) rotating inside said mixing chamber (50).

## Patentansprüche

1. Mischkopf (1) mit mechanischem Rühren für reaktive Harze, aufweisend:
einen Kopfkörper, der auch als Hydraulikblock wirkt und intern einen Hauptpfad (2) für ein reaktives Hauptharz, einen ersten sekundären Pfad (3) für ein erstes sekundäres reaktives Harz und einen zweiten sekundären Pfad (4) für ein zweites sekundäres reaktives Harz bildet:
**dadurch gekennzeichnet,**
**dass** jeder der Pfade (2; 3; 4) durch Drehen jeweils eines Hauptdrehwählers (20), eines ersten sekundären Drehwählers (30) und eines zweiten sekundären Drehwählers (40) selektiv konfiguriert werden kann in einer Gießkonfiguration, bei der sich jeder der Pfade (2; 3; 4) zwischen einem jeweiligen stromaufwärtigen Eintrittsanschluss (21; 31; 41) und einem Auslass (26, 260) erstreckt, der derart angeordnet ist, dass er in eine stromabwärtige Mischkammer (50) führt, oder in einer Rezirkulationskonfiguration, bei der sich jeder der Pfade (2; 3; 4) zwischen dem jeweiligen stromaufwärtigen Eintrittsanschluss (21; 31; 41) und einem jeweiligen stromabwärtigen Rezirkulationsanschluss (22; 32; 42) erstreckt;
und **dass** der Mischkopf (1) ferner aufweist: eine erste Kupplung (33) zum selektiven Zusammenkoppeln des ersten sekundären Drehwählers (30) und des Hauptdrehwählers (20); sowie eine zweite Kupplung (43) zum selektiven Koppeln des zweiten sekundären Drehwählers (40) und des Hauptdrehwählers (20).

2. Mischkopf (1) nach Anspruch 1,
wobei die erste Kupplung (33) und die zweite Kupplung (43) die jeweiligen Drehwähler (20, 30; 20, 40) in mechanisch entsprechenden Positionen koppeln, in denen die beiden gekoppelten Drehwähler die gleiche Konfiguration für den Hauptpfad (2) und den ersten sekundären Pfad (3) sowie für den Hauptpfad (2) und den zweiten sekundären Pfad (4) jeweils in unterbrochener Weise bilden.

3. Mischkopf (1) nach Anspruch 1,
wobei die Drehwähler (20, 30, 40) Zugangsöffnungen mit gleichen Winkeln aufweisen, so dass die synchrone Drehung von zwei Drehwählern (20, 30, 40) die gleiche Konfiguration von unterbrochenem Hauptpfad (2), erstem sekundären Pfad (3) und zweitem sekundären Pfad (4) beibehält.

4. Mischkopf (1) nach einem der vorhergehenden Ansprüche,
wobei der Hauptdrehwähler (20), der erste sekundäre Drehwähler (30) und der zweite sekundäre Drehwähler (40) koaxial sind.

5. Mischkopf (1) nach Anspruch 4,
wobei der Hauptdrehwähler in integraler Weise mit einer Stützwelle (23) ausgebildet ist; wobei der erste sekundäre Drehwähler (30) und der zweite sekundäre Drehwähler (40) jeweils in integraler Weise mit einer ersten Hülse (36) und einer zweiten Hülse (46) ausgebildet sind, die an den beiden gegenüberliegenden Seiten des Hauptdrehwählers (20) koaxial über der Stützwelle (23) angeordnet sind, wobei die erste und die zweite Kupplung (33; 43) die erste Hülse und die zweite Hülse (36; 46) selektiv mit der Stützwelle (23) rotationsmäßig koppeln.

6. Mischkopf (1) nach Anspruch 5,
wobei eine mit einer inerten Barriereflüssigkeit gefüllte Trennzone (25) zwischen einem zentralen Bereich (24) der Stützwelle (23), der den Hauptdrehwähler (20) abstützt, und den Hülsen (36; 46) vorgesehen ist.

7. Mischkopf (1) nach einem der vorhergehenden Ansprüche,
wobei die erste Kupplung (33) und die zweite Kupplung (43) Zahnkupplungen sind.

8. Mischkopf (1) nach Anspruch 7,
wobei die erste Kupplung (33) und die zweite Kupplung (43) Frontzahnkupplungen sind.

9. Mischkopf (1) nach Anspruch 8 bei Abhängigkeit von Anspruch 5, wobei sowohl die erste Kupplung (33) als auch die zweite Kupplung (43) jeweilige antreibende Frontzähne (37; 47) aufweisen, die sich am Ende der jeweiligen dem Hauptdrehwähler (20) zugewandten ersten oder zweiten Hülse (36; 46) befinden, sowie jeweilige angetriebene Frontzähne (37'; 47') aufweist, die mit der Stützwelle (23) rotationsmäßig verriegelt und relativ zu dieser axial verschiebbar sind.

10. Mischkopf (1) nach einem der vorhergehenden Ansprüche,
weiterhin aufweisend einen ersten Auswahlaktuator (34) zum rotationsmäßigen Antreiben des ersten sekundären Drehwählers (30) und einen zweiten Auswahlaktuator (44) zum rotationsmäßigen Antreiben des zweiten sekundären Drehwählers (40); wobei die Drehung bei Bedarf auf den Hauptdrehwähler (20) übertragen wird mittels der ersten Kupplung (33) oder mittels der zweiten Kupplung (43), wenn sich diese in der gekoppelten Konfiguration befindet.

11. Mischkopf (1) nach Anspruch 10,
wobei der erste Auswahlaktuator (34) und der zweite Auswahlaktuator (44) lineare Aktuatoren sind, wobei die Bewegung mittels einer Zahnstangen-und-Ritzel-Getriebes (38) auf den jeweiligen sekundären Drehwähler (30; 40) übertragen wird.

12. Mischkopf (1) nach einem der Ansprüche 10 oder 11,
wobei die Auswahlaktuatoren (34, 44) pneumatische Aktuatoren sind.

13. Mischkopf (1) nach einem der vorhergehenden Ansprüche,
wobei sowohl der erste als auch der zweite sekundäre Drehwähler (30; 40) mit einem jeweiligen Doppelzahnritzel (39; 49) versehen sind, das zusätzlich zu radialen Zähnen zur Übertragung der Bewegung antreibende Frontzähne (37; 47) aufweist, die mit angetriebenen Frontzähnen (37'; 47') zusammenarbeiten, um die jeweilige Kupplung (33; 43) zu bilden.

14. Mischkopf (1) nach Anspruch 13,
wobei jeder sekundäre Drehwähler (30; 40) in der diametralen Masse des jeweiligen Doppelzahnritzels (39; 49) enthalten ist.

15. Mischkopf (1) nach einem der vorhergehenden Ansprüche,
weiterhin aufweisend einen ersten Kupplungsaktuator (35) und einen zweiten Kupplungsaktuator (45), wobei die Kupplungsaktuatoren jeweils eine Kopplung/Entkopplung der ersten Kupplung (33) und eine Kopplung/Entkopplung der zweiten Kupplung (43) ausführen.

16. Mischkopf (1) nach Anspruch 15,
wobei die Kupplungsaktuatoren (35; 45) einen Doppelplattenkolben zum axialen Bewegen einer Komponente der jeweiligen Kupplung (33; 43) aufweisen.

17. Mischkopf (1) nach einem der vorhergehenden Ansprüche,
wobei jeder der Pfade (2; 3; 4) aufweist: einen Eintrittskanal, der sich zwischen dem jeweiligen Eintrittsanschluss (21; 31; 41) und dem jeweiligen Drehwähler (20; 30; 40) erstreckt; einen Gießkanal, der sich zwischen dem jeweiligen Drehwähler (20; 30; 40) und einem Auslass (26; 260) an der Mischkammer (50) erstreckt; einen Rezirkulationskanal, der sich zwischen dem jeweiligen Drehwähler (20; 30; 40) und dem jeweiligen Rezirkulationsanschluss (22; 32; 42) erstreckt; wobei jeder der Drehwähler (20; 30; 40) einen feststehenden inneren Pfad zwischen zwei Zugangsöffnungen aufweist; wobei in der Gießkonfiguration eine Zugangsöffnung des Drehwählers (20; 30; 40) mit dem jeweiligen Eintrittskanal in Verbindung steht und die andere Zugangsöffnung mit dem jeweiligen Gießkanal in Verbindung steht und den Bereich stromaufwärts von dem Rezirkulationskanal abschließt; wobei in der Rezirkulationskonfiguration eine Zugangsöffnung des Drehwählers (20; 30; 40) mit dem jeweiligen Eintrittskanal in Verbindung steht und die andere Zugangsöffnung mit dem jeweiligen Rezirkulationskanal in Verbindung steht und den Bereich stromaufwärts von dem Gießkanal abschließt, wobei bei Kopplung mittels der ersten Kupplung (33) und der zweiten Kupplung (43) sich die jeweiligen Drehwähler (20, 30; 20, 40) synchron mit den Zugangsöffnungen an den Öffnungs- und Schließrändern bewegen.

18. Mischanordnung (10) mit einem Mischkopf (1) nach einem der vorhergehenden Ansprüche, der mit einem Mischer (5) verbunden ist, wobei der Mischer (5) aufweist: einen Korbstator (52), der intern die Mischkammer (50) bildet, in der ein oder mehrere Auslässe (26) des Mischkopfes (5) austreten; und einen Rotor (51), der sich im Inneren der Mischkammer (50) dreht.

## Revendications

1. Tête de mélange (1) avec une agitation mécanique pour des résines réactives, comprenant :
un corps de tête servant également de bloc hydraulique définissant de manière interne un chemin principal (2) pour une résine réactive principale, un premier chemin auxiliaire (3) pour une première résine réactive auxiliaire, et un second chemin auxiliaire (4) pour une seconde résine réactive auxiliaire ; **caractérisée en ce que** chacun desdits chemins (2 ; 3 ; 4) est capable d'être configuré sélectivement, au moyen d'une rotation respectivement d'un sélecteur rotatif principal (20), d'un premier sélecteur rotatif auxiliaire (30) et d'un second sélecteur rotatif auxiliaire (40), dans une configuration de coulée, où chacun desdits chemins (2 ; 3 ; 4) s'étend entre un orifice d'entrée en amont (21 ; 31 ; 41) respectif et une évacuation (26, 260), agencée de façon à mener dans une chambre de mélange en aval (50), ou dans une configuration de recirculation, où chacun desdits chemins (2 ; 3 ; 4) s'étend entre l'orifice d'entrée en amont (21 ; 31 ; 41) respectif et un orifice de recirculation en aval (22 ; 32 ; 42) respectif ; et **en ce que** ladite tête de mélange (1) comprend en outre : un premier accouplement (33) permettant d'accoupler ensemble sélectivement le premier sélecteur rotatif auxiliaire (30) et le sélecteur rotatif principal (20) ; et un second accouplement (43) permettant d'accoupler sélectivement le second sélecteur rotatif auxiliaire (40) et le sélecteur rotatif principal (20).

2. Tête de mélange (1) selon la revendication 1, dans laquelle ledit premier accouplement (33) et ledit second accouplement (43) accouplent les sélecteurs rotatifs (20, 30 ; 20, 40) respectifs dans des positions correspondantes mécaniquement dans lesquelles les deux sélecteurs rotatifs accouplés définissent la même configuration pour le chemin principal (2) et le premier chemin auxiliaire (3) et pour le chemin principal (2) et le second chemin auxiliaire (4), croisés respectivement.

3. Tête de mélange (1) selon la revendication 1, dans laquelle les sélecteurs rotatifs (20, 30, 40) ont des ouvertures d'accès aux mêmes angles, de sorte que la rotation synchrone de deux sélecteurs rotatifs (20, 30, 40) maintienne une même configuration du chemin principal (2), du premier chemin auxiliaire (3) et du second chemin auxiliaire (4) croisés.

4. Tête de mélange (1) selon l'une des revendications précédentes, dans laquelle ledit sélecteur rotatif principal (20), ledit premier sélecteur rotatif auxiliaire (30) et ledit second sélecteur rotatif auxiliaire (40) sont coaxiaux.

5. Tête de mélange (1) selon la revendication 4, dans laquelle ledit sélecteur rotatif principal est d'un seul bloc avec un arbre de support (23) ; ledit premier sélecteur rotatif auxiliaire (30) et ledit second sélecteur rotatif auxiliaire (40) étant respectivement d'un seul bloc avec un premier manchon (36) et un second manchon (46) qui sont agencés de manière coaxiale au-dessus dudit arbre de support (23) au niveau des deux côtés opposés du sélecteur rotatif principal (20), lesdits premier et second accouplements (33 ; 43) accouplant sélectivement de manière rotative lesdits premier manchon et second manchon (36 ; 46) à l'arbre de support (23).

6. Tête de mélange (1) selon la revendication 5, dans laquelle une zone de séparation (25), remplie d'un liquide barrière inerte, est prévue entre une portion centrale (24) dudit arbre de support (23), qui supporte le sélecteur rotatif principal (20), et lesdits manchons (36 ; 46).

7. Tête de mélange (1) selon l'une des revendications précédentes, dans laquelle lesdits premier accouplement (33) et second accouplement (43) sont des accouplements à dents.

8. Tête de mélange (1) selon la revendication 7, dans laquelle lesdits premier accouplement (33) et second accouplement (43) sont des accouplements à dents avant.

9. Tête de mélange (1) selon la revendication 8 lorsqu'elle est dépendante de la revendication 5, dans laquelle ledit premier accouplement (33) et ledit second accouplement (43) comprennent tous deux des dents avant d'entraînement (37 ; 47) respectives situées au niveau de l'extrémité du premier ou second manchon (36 ; 46) respectif faisant face au sélecteur rotatif principal (20), et des roues avant entraînées (37' ; 47') respectives verrouillées de manière rotative avec l'arbre de support (23) et pouvant coulisser de manière axiale par rapport à celui-ci.

10. Tête de mélange (1) selon l'une des revendications précédentes, comprenant en outre un premier actionneur de sélection (34), permettant d'entraîner de manière rotative le premier sélecteur rotatif auxiliaire (30), et un second actionneur de sélection (44), permettant d'entraîner de manière rotative le second sélecteur rotatif auxiliaire (40) ; une rotation étant transmise, lorsque c'est nécessaire, au sélecteur rotatif principal (20), respectivement au moyen du premier accouplement (33) ou au moyen du second accouplement (43), lorsqu'ils sont dans la configuration accouplée.

11. Tête de mélange (1) selon la revendication 10, dans laquelle ledit premier actionneur de sélection (34) et ledit second actionneur de sélection (44) sont des actionneurs linéaires, le mouvement étant transmis au sélecteur rotatif auxiliaire (30 ; 40) respectif au moyen d'un engrenage à pignon et crémaillère (38).

12. Tête de mélange (1) selon l'une ou l'autre des revendications 10 ou 11, dans laquelle lesdits actionneurs de sélection (34, 44) sont des actionneurs pneumatiques.

13. Tête de mélange (1) selon l'une des revendications précédentes, dans laquelle les premier et second sélecteurs rotatifs auxiliaires (30 ; 40) sont tous deux dotés d'un pignon à double denture (39 ; 49) respectif qui a, en plus de dents radiales permettant de transmettre le mouvement, des dents avant d'entraînement (37 ; 47) qui coopèrent avec des dents avant entraînées (37' ; 47') de façon à définir l'accouplement (33 ; 43) respectif.

14. Tête de mélange (1) selon la revendication 13, dans laquelle chaque sélecteur rotatif auxiliaire (30 ; 40) est compris dans le volume diamétral du pignon à double denture (39 ; 49) respectif.

15. Tête de mélange (1) selon l'une des revendications précédentes, comprenant en outre un premier actionneur d'accouplement (35) et un second actionneur d'accouplement (45), lesdits actionneurs d'accouplement mettant en œuvre respectivement un accouplement/désaccouplement du premier accouplement (33) et un accouplement/désaccouplement du second accouplement (43).

16. Tête de mélange (1) selon la revendication 15, dans laquelle lesdits actionneurs d'accouplement (35 ; 45) comprennent un piston à double plaque permettant de déplacer de manière axiale un composant de l'accouplement (33 ; 43) respectif.

17. Tête de mélange (1) selon l'une des revendications précédentes, dans laquelle :
chacun desdits chemins (2 ; 3 ; 4) comprend un conduit d'entrée s'étendant entre l'orifice d'entrée (21 ; 31 ; 41) respectif et le sélecteur rotatif (20 ; 30 ; 40) respectif ;
un conduit de coulée s'étendant entre le sélecteur rotatif (20 ; 30 ; 40) respectif et une évacuation (26 ; 260) sur la chambre de mélange (50) ; un conduit de recirculation s'étendant entre le sélecteur rotatif (20 ; 30 ; 40) respectif et l'orifice de recirculation (22 ; 32 ; 42) respectif ; chacun desdits sélecteurs rotatifs (20 ; 30 ; 40) a un chemin interne fixe entre deux ouvertures d'accès ; dans la configuration de coulée le sélecteur rotatif (20 ; 30 ; 40) a une ouverture d'accès communiquant avec le conduit d'entrée respectif et l'autre ouverture d'accès communiquant avec le conduit de coulée respectif, fermant en amont le conduit de recirculation ; dans la configuration de recirculation le sélecteur rotatif (20 ; 30 ; 40) a une ouverture d'accès communiquant avec le conduit d'entrée respectif et l'autre ouverture d'accès communiquant avec le conduit de recirculation respectif, fermant en amont le conduit de coulée, dans laquelle, lorsqu'ils sont accouplés au moyen du premier accouplement (33) et du second accouplement (43), les sélecteurs rotatifs (20, 30 ; 20, 40) respectifs se déplacent avec un synchronisme des ouvertures d'accès sur les côtés d'ouverture et de fermeture.

18. Ensemble de mélange (10) comprenant une tête de mélange (1) selon l'une des revendications précédentes raccordée à un mélangeur (5), ledit mélangeur (5) comprenant : un stator à panier (52) définissant de manière interne la chambre de mélange (50) dans laquelle une ou plusieurs évacuations (26) de la tête de mélange (5) émergent ; et un rotor (51) tournant dans ladite chambre de mélange (50).
